# EUROPEAN PATENT APPLICATION

(11) **EP 4 001 076 A1**
(43) Date of publication of application: **25.05.2022**
(21) Application number: 21075015.4
(22) Date of filing: 14.10.2021
(51) Int. Cl.: B62J 11/00, B65D 67/02

(54) **SET SUSPENSION HOOKS FOR ATTACHING A CRATE TO A TUBULAR OBJECT**

(30) Priority: 12.11.2020 NL 1043842
(71) Applicant: JANSEN, Mathijs, Petrus, Johannes, 6543 XW Nijmegen (NL)
(72) Inventor: JANSEN, Mathijs, Petrus, Johannes, 6543 XW Nijmegen (NL)

(57) **Abstract**

The invention relates to a set of suspension hooks (1), for temporarily coupling or attaching a crate (8), mostly filled with bottles, to a horizontally tube-shaped object, mostly the cross tube (4) of the handlebar of a bicycle, moped or rollator in a very inventive and specially surprising practical way and which suspension hook (1) is to be produced in a very economical way from a strong plastic material, such as nylon.

## Description

### Background of the invention.

The invention relates to a set of suspension hooks for fastening a luggage holder or crate, mostly a crate with bottles, temporarily in a horizontal, vertical and rotational way to a tubular object, wherein the suspension hook has a S-shape with an elongated body, wherein one end of its grips around a tubular object, mostly being a horizontal cross tube from a handlebar of a bicycle or moped, a luggage barrier or a rollator and the other end of the suspension hook grips around the carrier element of said crate and furthermore the bottom line of the crate adjusts against an upstanding tube.

A somewhat similar invention is known from the Dutch Patent NL 1035135, filed 06-03-2008, titled: "Connecting Device for a Detachable Luggage Basket for Bicycles", inventor Owen Lee of Taichung. It concerns a luggage basket with two hinged hand grips, which can be connected temporarily with a rack, which is mounted on a fixed way to the frame and handlebar of the bicycle. Said rack is situated at a considerable distance in front of the steering rod. Furthermore it concerns a rack of relatively thin rod material, which can therefore only support a little shopping basket of relatively light weight.

The drawback of this rack according to said invention is, that it can bear only a light basket adapted to the fragile rack. This rack in question is therefore unusable for hanging or supporting, for example. A crate with (beer) bottles, since these crates cannot be hooked thereon and the rack is too weak, due to its constructive design.

Then the device is known for placing a crate on a rack in front of a bicycle with an embodiment similar to a luggage carrier, called a support surface. This whole is known from the Dutch Patent NL 1030435, filed 15-11-2005, titled: "Device for Releasable Mounting of a Crate on a Support Surface", inventor de Vrieze P.A. of Eindhoven. A special retainer has been placed loosely on the support surface (slid in), which holds the crate just above the support surface. When the crate is completely filled with heavier groceries it rests on a weak way on said carrier.

The drawback of this invention is, that the rack, especially when filled with a small amount of goods, hangs above the rack as a swaying construction and can swing off. This is a serious drawback. So the above mentioned inventions are particularly not usable with regard to a stable catching for carrying of a filled crate with, for example, beer bottles. The production costs of mentioned inventions are also relatively high.

### Summary of the invention.

The object of the invention is to provide such a temporarily mountable support or suspension construction for crates with mainly beer bottles, which does not have the drawbacks described above and which can be manufactured in an economic way.

Added to this a temporary support structure according to the invention is developed in such a way, wherein the characteristics of said set suspension hooks consists of two suspension grip ends, which can be arranged separately from each other, wherein said one grip end of said suspension hook has an open half circular shape for gripping around the cross tube of the handlebar of the bicycle and is also provided with a rear cam against the crate, wherein the other grip end has a U-shape with upstanding legs and grips into a handgrip from the side surface of said crate or around the carrying bracket of the crate on top, wherein the touch surfaces of the suspension hook have a pointed roof shape with a top angle alpha (α) to the horizontal and wherein the suspension hooks are manufactured from a material, which material has mechanically strong properties and wherein the material costs are relatively low.

The advantage is, that a very simple, sturdy and above all an economically manufactured set of suspension hooks has been developed, which temporarily fixed a more heavily filled crate to the crossbar of the handlebar of a bicycle in a mechanically robust way.

Furthermore, the device, being a set of suspension hooks according to the invention is further developed in such a way, that the material of the suspension hook is a mechanically strong plastic, such a nylon.

The advantage is a highly efficient and technically manufactured suspension hook by means of injection moulding and has strong mechanical properties.

Then the device, being a set of suspension hooks according to the invention, is further developed in such a way, characterized in that said suspension hook is placed from the side handgrip of a crate of the same angle alpha (α) over an upper corner of the crate and makes the same angle alpha (α) with the crossbar of the handlebar of the bicycle.

The advantage of this is, that the crate with the set of suspension hooks according to the invention hangs at the handlebar and adjusts against a vertical tubular object, as the cross tube and the vertical tube of the handlebar of the bicycle without swinging or swaying.

Furthermore, the device according to the invention is further developed in such a way, characterized in that said set of suspension hooks from the carrier bracket of the crate are installed parallel to each other in order to couple at a tube-shaped horizontal object, such as the cross tube of the handlebar of a bicycle and said handgrip on top of the crate.

The advantage is, that the crate can be easily coupled to every type of tube-shaped object, also when swinging or swaying is not an issue.

### Brief Description of the Drawing.

Hereby shows:
Figure 1 a side view of the suspension hook according to the invention on an enlarged scale;
Figure 2 a view in oblique projection of a crate on which a set of suspension hooks are arranged in a manner according to a first embodiment of the invention at a horizontal angle alpha (α):
Figure 3 the same as figure 2, but now the set of suspension hooks are arranged parallel to each other and securing the carrying bracket of a crate being designed as such: and
Figure 4 an arrangement of the set of suspension hooks attached to the side grip elements of a crate and attached to the handlebar of a bicycle according to the invention.

### Detailed description.

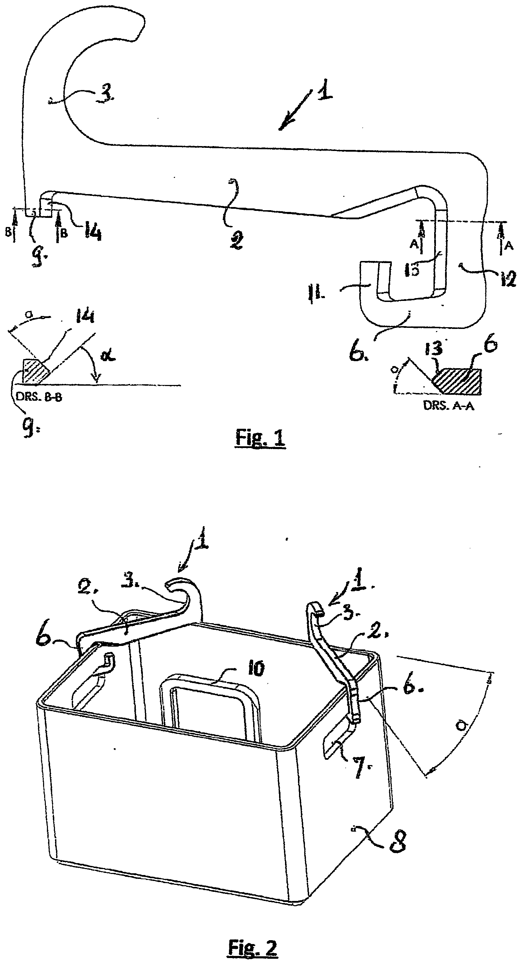

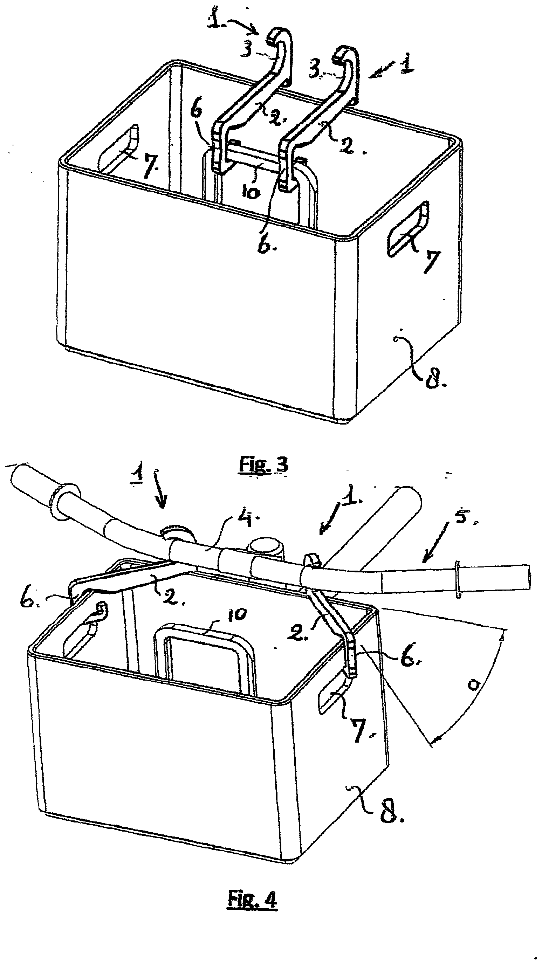

Figure 1 shows a side view of the suspension hook 1 according to the invention and on an enlarged scale. The suspension hook 1 has an overall S-shape with an elongated body 2, which can be executed or designed in a rectangular or I-shaped cross-section. At the outer ends of said body 2, one hook 3 of said body 2 attached to the cross tube 4 of the handlebar 5 of the bicycle (see figure 4) and the other hook 6 of said body 2 attaches to the handgrips or openings 7 (see figures 2, 3, and 4) of the crate 8. The above mentioned suspension hook 1 is herein arranged over a horizontal angle alpha (α) with the corner of the crate 8. This way a stable position of the rate 8 relative to the cross bar 4 of the handlebar 5 of the bicycle is obtained, as can be seen in figure 4. Then, the contact surface 13 in figure 1 is also executed under an angle alpha (α) and a rear cam 9 against the back side of the crate 8. At said rear cam 9 the contact surface 14 is also executed with an angle alpha (α) of around 45 degrees. The suspension hooks, identified in figure 3, can be coupled parallel to each other to the carrying or bearing bracket 10 of the crate 8 and so this crate 8 can be coupled to any horizontally tube-shaped object such as a cross tube 4 of a handlebar 5.

Finally, it should be mentioned that a preferred embodiment of the suspension hook 1 according to the invention is shown above, which can be attached to a crate 8 in two ways. However, further modifications are possible without leaving the scope of this patent.

## Claims

1. A set of suspension hooks for stiffly fastening a luggage holder or crate, mostly a crate with bottles, temporarily in a horizontal, vertical and rotational way to a tubular object, wherein the suspension hook has a S-shape with an elongated body, wherein one hook of the S-shape engages the horizontal cross tube of the object, being a bicycle or moped/motorbike, a luggage barrier or a rollator or some mobility device and the other end of the suspension hook grips around the carrier element of said crate and wherein the bottom of the crate adjusts against an upstanding tube, **characterized in that,** said set of suspension hooks (1) consists of two separately executed hook ends (3, 6) at the ends of its body 2, wherein on hook end (3) has an open half circular shape for connecting or seizing to the cross tube (4) of the handlebar (5) of the bicycle and is provided with a rear cam (9) for adjusting against the back side of the crate (8), wherein the other hook end (6) has a U-shape with unequally sized upstanding legs (11, 12) and catches in a handgrip (7) or carrier bracket (10) of said crate (8), wherein said contact surfaces (13, 14) of said hook ends (3, 6) and said rear cam (9) have a pointed roof-shape with an angle alpha (α) to the horizontal and wherein the suspension hooks (1) are made or produced from a material, which has strong mechanical properties and wherein the material costs are low.

2. A set of suspension hooks according to claim 1, **characterized in that,** the material of the suspension hook (1) is a mechanically strong plastic, such as nylon.

3. A set of suspension hooks according to claim 1, **characterized in that,** said suspension hook (1) is placed from the handgrip (7) of the crate (8) over the same angle alpha (α) as the angle alpha (α) formed with the cross tube (4) of the handlebar (5) of, for instance, a bicycle, wherein angle alpha (α) is 45 degrees.

4. A set of suspension hooks according to claim 1-2, **characterized in that,** said suspension hooks (1 and 1 in figure 3) extend from the carrying bracket (10) of the crate (8) parallel to each other to the cross tube (4) of the handlebar (5) of the bicycle for connecting said crate (8) to the bicycle, wherein angle alpha (α) is 90 degrees.
